# EUROPÄISCHE PATENTSCHRIFT

(11) **EP 1 664 959 B1**
(45) Veröffentlichungstag und Bekanntmachung des Hinweises auf die Patenterteilung: **02.01.2008**
(21) Anmeldenummer: 04764273.1
(22) Anmeldetag: 19.08.2004
(51) Int. Cl.: G05D 16/20, F16K 31/06

(54) **PROPORTIONAL-DRUCKREGELVENTIL**
PROPORTIONAL PRESSURE CONTROL VALVE
SOUPAPE DE REGULATION DE PRESSION PROPORTIONNELLE

(30) Priorität: 17.09.2003 DE 10342892
(43) Veröffentlichungstag der Anmeldung: 07.06.2006
(73) Patentinhaber: ZF FRIEDRICHSHAFEN AG, 88038 Friedrichshafen (DE)
(72) Erfinder: MAYR, Karlheinz, A-6900 Bregenz (AT); SCHMIDT, Thilo, 88074 Meckenbeuren (DE); KILL, Walter, 88046 Friedrichshafen (DE); MOOSMANN, Markus, 88241 Ravensburg (DE)
(86) Internationale Anmeldenummer: PCT/EP2004/009289
(87) Internationale Veröffentlichungsnummer: WO 2005/026858

(56) Entgegenhaltungen:
- WO-A-98/48332
- US-A- 6 152 422

## Beschreibung

Die vorliegende Erfindung betrifft ein Proportional-Druckregelventil zur Regelung des Druckniveaus in einem Hydraulikkreis nach dem Oberbegriff des Anspruchs 1.

Nach dem Stand der Technik wird in einem Getriebe, insbesondere in einem Automatgetriebe für ein Kraftfahrzeug, der Druck in einem Hydraulikkreis bedarfsorientiert geregelt. Während für die Schmierölversorgung der Getriebebauteile das Druckniveau im Hydraulikkreis niedrig gehalten werden kann, muss während der Schaltvorgänge der Druck stark angehoben werden, um beispielsweise Schaltelemente schnell befüllen zu können.

Für die Regelung des Drucks in Hydraulikkreisen werden üblicherweise Druckregler eingesetzt, welche Nachfolgeschieber zur Kupplungsbetätigung ansteuern. Die Steuerung der Nachfolgeschieber erfolgt innerhalb des Druckreglers mittels eines proportionalen Magneten, welcher u.a. aus einem Magnetkern, einer Magnetspule und einem Magnetanker besteht. Hierbei wird über den proportionalen Magneten der Spulenstrom proportional zu der Ausgangsgröße kraftgesteuert; der Magnetanker und damit der Nachfolgeschieber zur Kupplungssteuerung werden entsprechend dem Spulenstrom gesteuert. Aus den daraus resultierenden charakteristischen Magnetkraft-Strom-Kennlinien des Druckreglers werden in einer elektrohydraulischen Steuerung von Automatgetrieben die zur Kupplungsanpassung gewünschten Kennlinien erzeugt.

Die DE 199 43 066 beschreibt ein elektromagnetisch betätigbares hydraulisches Proportionalventil mit einem Magnetteil aus einer elektrisch ansteuerbaren Spule, einem in das Innere der Spule hineinragenden ortsfesten Kern und einem von der Spule beaufschlagten verschiebbar geführten Anker, der mit einem Schliessglied gekoppelt ist und mit einem Ventilteil, das jeweils wenigstens einen Zulaufkanal, einen Rücklaufkanal und einen Arbeitskanal sowie einen Ventilsitz aufweist, der in Wirkverbindung mit dem Schliessglied eine Druckmittelverbindung zwischen dem Arbeitskanal und dem Rücklaufkanal steuert. Das Schliessglied weist zumindest im Bereich seines dem Ventilsitz zugewandten Endes einen im Wesentlichen kegelförmigen Dichtkörper auf, dessen kleinere Stirnfläche dem Ventilsitz zugewandt ist, wobei der Dichtkörper an seinem dem Ventilsitz abgewandten Ende wenigstens eine Strömungsabrisskante aufweist.

Mit dieser Ausgestaltung soll erreicht werden, dass sich das hydraulische Proportionalventil gegenüber Temperatureinflüssen und strömungsbedingten Schwingungsanregungen stabil verhält. Die Druck-/Strom-Kennlinien des Proportionalventils weisen einen gegenüber herkömmlichen Druckregelventilen konstanteren und stetigeren Verlauf auf, da die Dichteigenschaften und das Verschleissverhalten dieses Proportionalventils verbessert sind.

Ein weiteres Proportional-Druckregelventil ist in der DE 199 04 901 der Anmelderin beschrieben, wobei dieses Proportional-Druckregelventil als Vorsteuerventil mit einer Druckreduzier- und einer Druckhaltefunktion ausgebildet ist. Das Ventil besteht aus einem Ventilgehäuse mit Zu- und Ablauföffnungen, einem Steuerelement, einer Ankerstange und einem proportionalen Magneten, welcher aus einem Magnetkern, einem Magnetanker und einer Magnetspule besteht, wobei der Proportionalmagnet in seinem Arbeitsbereich eine nahezu konstante Magnetkraft aufweist. In einer Halteposition des Magnetankers ist der kleinste axiale Abstand zwischen dem Magnetanker und dem Magnetkern derart bemessen, dass die Magnetkraft zwischen diesen beiden Bauteilen in der Halteposition größer ist als die Magnetkraft im Arbeitsbereich des Proportional-Magneten, wobei der Magnetanker durch diese Magnetkraft in der Halteposition feststellbar ist.

Schliesslich ist aus der DE 100 34 959 der Anmelderin ein Proportional-Druckregelventil bekannt mit einem Ventilteil, mit Zu- und Ablauföffnungen und mit wenigstens einem Schliessmittel zum Steuern einer Blende und einer der Öffnungen, sowie einem Magnetteil mit einem Magnetkern, einer Magnetspule und einem verschiebbar angeordneten Magnetanker. Mit dem Anker wirkt ein Betätigungselement zusammen, welches das Schliessmittel, insbesondere an der Blende der Zulauföffnung betätigt, wobei das Betätigungselement während des Regelvorgangs wenigstens teilweise in die Blende eindringt. Der hydraulisch wirksame Querschnitt der Blende wird dabei im Wesentlichen durch die Blendenlänge, den Blendendurchmesser und den Durchmesser des Betätigungselements in der Blende bestimmt.

Im Hinblick auf einen optimierten Durchfluss im Ventilteil, insbesondere im Bereich niedriger Temperaturen, d. h. bei höheren Viskositäten der Hydraulikflüssigkeit und im Hinblick auf geringere Strömungswiderstände weist dieses Proportional-Druckregelventil eine optimierte Ausprägung der durchflussbestimmenden Zuführgeometrie auf, d. h., dass das Verhältnis der Blendenlänge zum Blendendurchmesser kleiner als 2,0 gewählt ist, wobei diese durchflussbestimmende Blende insbesondere in der Zulauföffnung des Ventils angeordnet ist. Dadurch wird erreicht, dass dieses Ventil geringere Strömungsverluste, insbesondere bei hohen Ölviskositäten, d. h. bei niedrigen Temperaturen aufweist; es werden höhere Durchflussmengen und kürzere Ansprechzeiten des Ventils erzielt, wodurch dieses Proportional-Druck-regelventil bessere dynamische Werte ermöglicht.

In Automatgetrieben von Kraftfahrzeugen werden vornehmlich hydrodynamische Wandler als Anfahrelement eingesetzt. Insbesondere bei kaltem Getriebeöl ist der Energiebedarf dieses Bauteils sehr hoch, wodurch das Anfahrverhalten des Fahrzeuges beeinträchtigt wird. Auch das Ansprechverhalten der Getriebeschaltkupplungen ist im Minustemperaturbereich entsprechend verzögert, was ebenfalls als unangenehm empfunden wird.

In der WO 98/48332 A1 ist ein Proportional-Druckregelventil vom 3/2-Wegetyp angegeben. Das Ventil weist dabei ein Magnetteil und ein Ventilteil auf, wobei das Ventilteil mit einer Zulauföffnung und zwei Ablauföffnungen versehen ist. Die Zulauföffnung ist an dem dem Magnetteil abgewandten stirnseitigen Ende des Ventilteils koaxial zu dessen Längsachse ausgebildet, während die beiden Ablauföffnungen an der Seitenwand des Ventilteils radial zu dessen Längsachse ausgeführt ist. Ein Strahlumlenker zum optimierten Umlenken und/oder Führen eines Füllvolumenstroms ist nicht vorgesehen.

Aufgabe der vorliegenden Erfindung ist es, ein Proportional-Druckregelventil zu schaffen, mit dem eine Steigerung der dynamischen Regelfähigkeit von Lastschaltkupplungen, insbesondere der Anfahrkupplung in Automatgetrieben ohne hydroynamisches Anfahrelement und der Getriebeschaltkupplungen für Kraftfahrzeuge erreicht wird.

Die Lösung dieser Aufgabe erfolgt mit den im Anspruch 1 angegebenen Merkmalen; vorteilhafte Ausgestaltungen sind in den Unteransprüchen beschrieben.

Die Erfindung geht also aus von einem Proportional-Druckregelventil, das ein Magnetteil und ein Ventilteil aufweist, wobei das Ventilteil mit einer Zulauföffnung für den Zulaufvolumenstrom, einer ersten Ablauföffnung für den Füllvolumenstrom und einer zweiten Ablauföffnung für den Tankvolumenstrom versehen ist und einen Kugelsitz, einen mit einer Öffnung versehenen Flachsitz, ein Schliessteil zur Steuerung der Durchlaufmenge durch die Öffnung im Flachsitz aufweist. Die Zulauföffnung für den Zulaufvolumenstrom an dem dem Magnetteil abgewandten stirnseitigen Ende des Ventilteils ist dabei koaxial zu dessen Längsachse ausgebildet, während die wenigstens eine Ablauföffnung für den Füllvolumenstrom an der Seitenwand des Ventilteils radial zu dessen Längsachse ausgebildet ist.

Erfindungsgemäss ist dabei vorgesehen, dass ein Strahlumlenker vorgesehen ist, der zwischen dem Kugelsitz und dem Flachsitz am Flachsitz angeordnet und mit einer Kreuzbohrung versehen ist. Die Kreuzbohrung ist hierbei radial zu der Längsachse des Ventilteils derart ausgebildet, dass nach dem Durchströmen des Kugelsitzes zu dem Strahlumlenker strömende Fluidteilchen durch die Kreuzbohrung den Strahlumlenker und die Öffnung des Flachsitzes durchströmen können. Dabei sind der axiale Abstand des Strahlumlenkers von dem Kugelsitz sowie der Durchmesser und die Wanddicke des Strahlumlenkers derart gewählt, dass die durch den Strahlumlenker strömenden Fluidteilchen einer Ablenkung von wenigstens als 30° ausgesetzt sind.

Das erfindungsgemäss ausgestaltete Proportional-Druckregelventil weist den Vorteil eines geringeren Strömungswiderstandes auf, verglichen mit den herkömmlichen Druckregelventilen und gewährleistet eine Steigerung der dynamischen Regelfähigkeit der Lastschaltkupplungen, die Anfahrkupplungen in Automatgetrieben ohne hydrodynamisches Anfahrelement oder Getriebeschaltkupplungen sind. Es weist ausserdem den Vorteil kürzerer Ansprechzeiten auf und führt zu einer Steigerung der Eckfrequenz des Systems aus Kupplung + Anfahrelement, sodass bei Minustemperaturen ein spontanerer Kraftschluss ermöglicht wird.

Weitere Ausgestaltungen und Vorteile gehen aus der nachfolgenden Beschreibung eines bevorzugten Ausführungsbeispiels im Zusammenhang mit der beigefügten Zeichnung hervor; darin zeigen:
- Fig. 1: einen Schnitt durch das Ventilteil eines herkömmlichen Proportional-Druckregelventils nach dem Stand der Technik und
- Fig. 2: einen Schnitt durch ein Ventilteil eines erfindungsgemäss ausgestalteten Proportional-Druckregelventils.

Derartige Proportional-Druckregelventile sind dem Fachmann gut bekannt, sodass im Folgenden nur die für das Verständnis der Erfindung notwendigen Teile beschrieben werden.

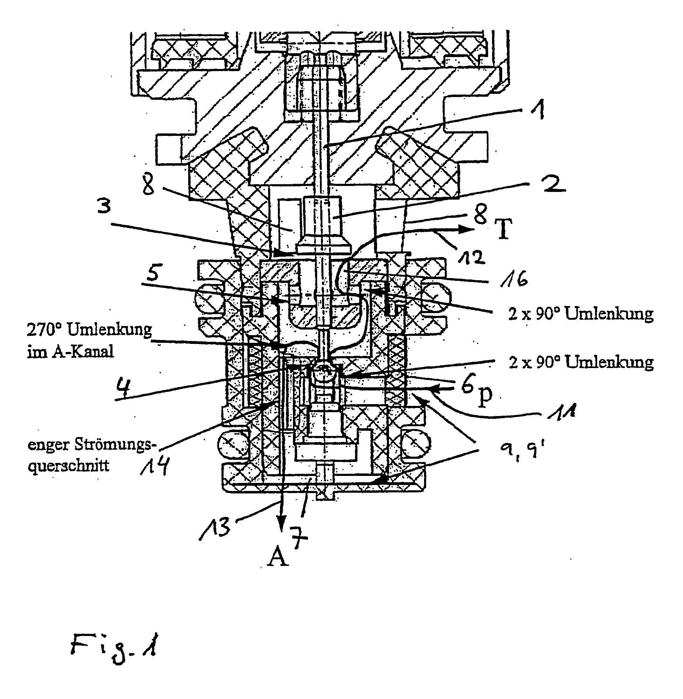

Das Proportional-Druckregelventil weist ein nicht näher dargestelltes im oberen Bereich der Figur 1 angedeutetes Magnetteil auf, das in herkömmlicher Weise einen Magnetkern, eine Magnetspule und einen verschiebbaren Magnetanker aufweist, sowie ein vom Magnetanker verschiebbares Betätigungsteil 1 für ein Schliessteil 2, das auf einem Flachsitz 3 zum Anschlag kommen kann und dabei eine im Flachsitz eingearbeitete durchgehende Öffnung 16 verschliessen kann.

Mit 4 ist ein herkömmlicher Kugelsitz für ein Ventil bezeichnet, mit 5 der Strahlumlenker, mit 6 die Zulauföffnung für den Zulaufvolumenstrom mit dem Zulaufdruck p, mit 7 eine Ablauföffnung für den Füllvolumenstrom zur Kupplung mit dem Arbeitsdruck A, mit 8 eine Ablauföffnung für den Tankvolumenstrom mit dem Umgebungsdruck T und mit 9, 9' zwei engmaschige Filtersiebe, wobei das Filtersieb 9 in die wenigstens eine Ablauföffnung 7 eingesetzt ist und das Filtersieb 9' in die Zulauföffnung 6 eingesetzt ist.

In Figur 1 sind ferner einige aus Fluidteilchen bestehende Stromfäden eingezeichnet um den Weg der Fluidteilchen durch das Druckregelventil zu verdeutlichen. Ein in die Zulauföffnung 6 für den Zulaufvolumenstrom eintretendes Flüssigkeitsteilchen folgt dem mit 11 bezeichneten Weg und wird nach Verlassen des Kugelsitzes 4 entweder dem Weg 12 durch eine Ablauföffnung 8 hindurch in Richtung zum Tank folgen oder dem mit 13 bezeichneten Weg durch eine Ablauföffnung 7 hindurch in Richtung zur Kupplung.

Dabei trifft es auf folgende Strömungswiderstände:
das Filtersieb 9, das typischerweise eine Maschenweite von 160 µm aufweist,
   eine 90°-Umlenkung
   den Kugelsitz 4 (für den Weg 11);
eine 270°-Umlenkung,
   einen mit 14 bezeichneten engen Strömungsquerschnitt,
   das Filtersieb 9', das ebenfalls typischerweise eine Maschenweite von 160 µm aufweist (für den Weg 13);
eine 90°-Umlenkung,
   zwei 90°-Umlenkungen im Strahlumlenker 5,
   den Flachsitz 3,
   den Tank (für den Weg 12).

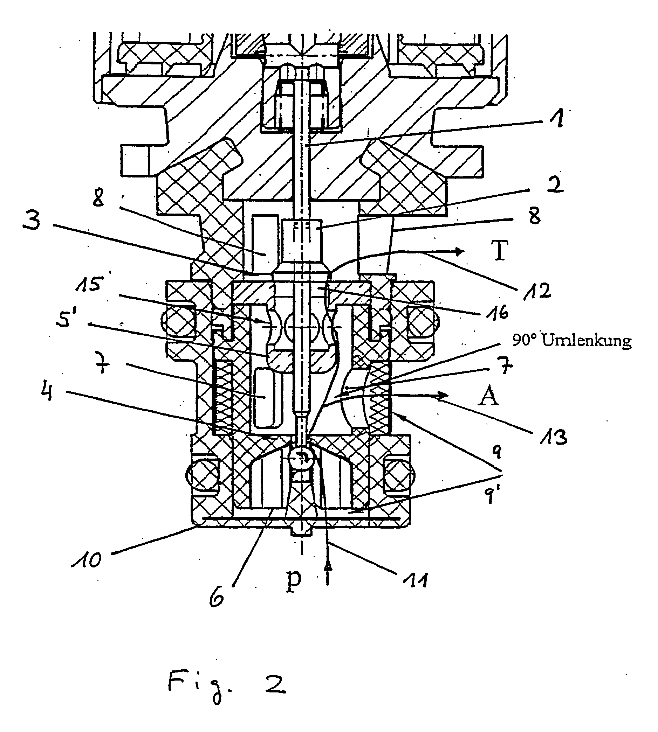

Bei dem in Fig. 2 dargestellten Ausführungsbeispiel des erfindungsgemässen Proportional-Druckregelventils, bei dem gleiche Teile mit gleichen Bezugszeichen versehen sind, befindet sich die Zulauföffnung 6 für den Zulaufvolumenstrom mit dem Zulaufdruck p in dem dem Magnetteil abgewandten stirnseitigen Ende 10 des Ventilteils und ist koaxial zu dessen Längsachse ausgebildet. Die wenigstens eine Ablauföffnung 7 für den Füllvolumenstrom in Richtung zur Kupplung mit dem Arbeitsdruck A ist in der Seitenwand des Ventilsteils radial zu dessen Längsachse ausgebildet.

Unterhalb des Flachsitzes 3 ist in die Strömung optimierender Weise ein dünnwandiger Strahlumlenker 5' eingesetzt, der vom Betätigungsteil 1 für das Schliessteil 2 durchdrungen wird und der mit einer grossen Kreuzbohrung 15 versehen ist. Dünnwandig bedeutet hierbei, dass die Wanddicke des Strahlumlenkers 5' kleiner als 0,15 · NW ist, während gross in diesem Zusammenhang bedeutet, dass der Durchmesser der Kreuzbohrung grösser als 0,50 · NW ist.

NW ist dabei die Nennweite, die als der Durchmesser der Öffnung 16 im Flachsitz 3 definiert ist.

In weiterer die Strömung optimierender Weise ist der axiale Abstand des Strahlumlenkers 5' vom Kugelsitz 4 grösser als 1,0 · NW, wobei sein Durchmesser vorzugsweise kleiner als 1,3 · NW ist.

Fig. 2 zeigt ferner die aus Fluidteilchen bestehenden Stromfäden zur Verdeutlichung des optimierten Strömungsverlaufs im erfindungsgemäss ausgestalteten Proportional-Druckregelventil, wobei ein in die Zulauföffnung 6 eintretendes Fluidteilchen dem Weg 11 folgt und dabei den Kugelsitz 4 geradlinig anströmt. Danach wird es entweder dem Weg 13 in Richtung eines oder mehrerer Ablauföffnungen 7 folgen, durch die der Füllvolumenstrom zur Kupplung geleitet wird, wobei es eine Umlenkung von 90° erfährt, oder dem Weg 12 folgen und dabei nahezu geradlinig den Strahlumlenker 5' und die Öffnung 16 im Flachsitz 3 durchströmen, wonach das Fluidteilchen eine 90°-Umlenkung in Richtung zur Ablauföffnung 8 für den Tankvolumenstrom erfährt.

An Strömungswiderständen verbleiben bei dieser Ausgestaltung nur noch:
das Filtersieb 9',
   der Kugelsitz 5 (für den Weg 11);
eine 90°-Umlenkung,
   das Filtersieb 9 (für den Weg 13);
eine im wesentlichen geradlinige Durchströmung des Strahlumlenkers 5',
   der Flachsitz 3,
   der Tank (für den Weg 12).

In weiterer den Strömungswiderstand minimierender Weise wird für die beiden Filtersiebe 9', 9, die in die Zulauföffnung 6 bzw. eine Ablauföffnung 7 eingesetzt sind, eine Maschenweite von mindestens 190 µm gewählt und für die Gesamtfläche der Ablauföffnungen 7 für den Füllvolumenstrom in Richtung Kupplung mit dem Arbeitsdruck A ein Wert von grösser als 4 · Nennfläche. Dabei ist die Nennfläche definiert als 1 · Nennweite ² · π/4. Damit steht ein erheblich breiterer Strömungsquerschnitt in Richtung Ablauföffnungen 7 für den Füllvolumenstrom zur Verfügung, verglichen mit dem engen Strömungsquerschnitt 14 von Fig. 1.

Aus den in Fig. 2 dargestellten Wegen 11 und 12 für die Stromfäden aus Fluidteilchen geht deutlich hervor, dass der Ablenkwinkel für die Fluidteilchen, die sich nach dem Durchströmen des Kugelsitzes 4 zum Strahlumlenker 5' bewegen und diesen durchströmen, nicht mehr als 30° beträgt. Nach dem Durchströmen des Strahlumlenkers 5' beträgt der Ablenkwinkel der sich in Richtung einer oder mehrerer Ablauföffnungen 8 für den Tankvolumenstrom bewegenden Fluidteilchen maximal 90°. Diejenigen Fluidteilchen, die sich nach dem Durchströmen des Kugelsitzes 4 in Richtung Ablauföffnung 7 bewegen, werden ebenfalls um maximal 90° abgelenkt.

Alle diese strömungsoptimierenden Massnahmen nach der Erfindung steigern die Eckfrequenzen des Druckregelventils im oben bereits erwähnten System aus Kupplung + Ansteuerelement zum Beispiel bei einer Temperatur von -20 °C um mehr als den Faktor 3. Dies führt zu der erstrebten verbesserten Regelfähigkeit der Kupplungen sowie zu kürzeren Ansprechzeiten, wie es im praktischen Einsatz bestätigt werden konnte.

### Bezugszeichen

- 1: Betätigungsteil
- 2: Schliessmittel
- 3: Flachsitz
- 4: Kugelsitz
- 5, 5': Strahlumlenker
- 6: Zulauföffnung
- 7: Ablauföffnung
- 8: Ablauföffnung
- 9, 9': Filtersieb
- 10: stirnseitiges Ende
- 11: Stromfaden
- 12: Stromfaden
- 13: Stromfaden
- 14: Strömungsquerschnitt
- 15: Kreuzbohrung
- 16: Öffnung

## Patentansprüche

1. Proportional-Druckregelventil mit einem Magnetteil und mit einem Ventilteil, wobei das Ventilteil mit einer Zulauföffnung (6) für den Zulaufvolumenstrom, einer ersten Ablauföffnung (7) für den Füllvolumenstrom und einer zweiten Ablauföffnung (8) für den Tankvolumenstrom versehen ist und einen Kugelsitz (4), einen mit einer Öffnung (16) versehenen Flachsitz (3) und ein Schliessteil (2) zur Steuerung der Durchlaufmenge durch die Öffnung (16) des Flachsitzes (3) aufweist, wobei die Zulauföffnung (6) für den Zulaufvolumenstrom an dem dem Magnetteil abgewandten stirnseitigen Ende (10) des Ventilteils koaxial und die wenigstens eine Ablauföffnung (7) für den Füllvolumenstrom an der Seitenwand des Ventilteils radial zu dessen Längsachse ausgebildet sind, **gekennzeichnet durch** einen Strahlumlenker (5'), der zwischen dem Kugelsitz (4) und dem Flachsitz (3) am Flachsitz (3) angeordnet ist und mit einer Kreuzbohrung (15) versehen ist, welche radial zu der Längsachse des Ventilteils derart ausgebildet ist, dass nach dem Durchströmen des Kugelsitzes (4) zu dem Strahlumlenker (5') strömende Fluidteilchen **durch** die Kreuzbohrung (15) den Strahlumlenker (5') und die Öffnung (16) des Flachsitzes (3) durchströmen können, wobei der axiale Abstand des Strahlumlenkers (5') von dem Kugelsitz (4), sowie der Durchmesser und die Wanddicke des Strahlumlenkers (5') derart gewählt sind, dass die **durch** den Strahlumlenker (5') strömenden Fluidteilchen einer Ablenkung von weniger als 30° ausgesetzt sind.

2. Proportional-Druckregelventil nach Anspruch 1, **dadurch gekennzeichnet, dass** der axiale Abstand des Strahlumlenkers (5') vom Kugelsitz (4) grösser als 1 · NW ist, wobei NW der Durchmesser der Öffnung (16) im Flachsitz (3) ist.

3. Proportional-Druckregelventil nach Ansprüchen 1 und 2, **dadurch gekennzeichnet, dass** der Durchmesser des Strahlumlenkers (5') kleiner als 1,3 · NW ist.

4. Proportional-Druckregelventil nach Ansprüchen 1 bis 3, **dadurch gekennzeichnet, dass** die Wanddicke des Strahlumlenkers (5') kleiner als 0,15 · NW ist.

5. Proportional-Druckregelventil nach einem oder mehreren der vorhergehenden Ansprüche, **dadurch gekennzeichnet, dass** der Durchmesser der Kreuzbohrung (15) grösser als 0,5 · NW ist.

6. Proportional-Druckregelventil nach einem oder mehreren der vorhergehenden Ansprüche, **dadurch gekennzeichnet, dass** in die Zulauföffnung (6) und in die wenigstens eine Ablauföffnung (7) Filtersiebe (9', 9) eingesetzt sind, deren Maschenweite mindestens 190 µm beträgt.

7. Proportional-Druckregelventil nach einem oder mehreren der vorhergehenden Ansprüche, **dadurch gekennzeichnet, dass** die Gesamtfläche der Ablauföffnungen (7) für den Füllvolumenstrom grösser als 4 · Nennfläche ist, wobei die Nennfläche gleich 1 · NW² · π/4 ist.

## Claims

1. Proportional pressure regulating valve with a magnet part and a valve part, which valve part is provided with an inlet orifice (6) for the intake flow volume, a first outlet orifice (7) for the filling flow volume and a second outlet orifice (8) for the tank flow volume, and has a spherical seat (4), a flat seat (3) provided with an orifice (16) and a closing part (2) for controlling the quantity circulating through the orifice (16) of the flat seat (3), and the inlet orifice (6) for the intake flow volume is disposed at the terminal end (10) of the valve part, coaxially therewith, remote from the magnet part, and the at least one outlet orifice (7) for the filling flow volume is disposed on the side wall of the valve part radially with respect to its longitudinal axis, **characterised by** a flow deflector (5') disposed on the flat seat (3) between the spherical seat (4) and the flat seat (3), and provided with a cross-bore (15) disposed radially with respect to the longitudinal axis of the valve part so that after flowing through the spherical seat (4), fluid particles flowing to the flow deflector (5') are able to flow through the cross-bore (15), the flow deflector (5') and orifice (16) of the flat seat (3), and the axial distance of the flow deflector (5') from the spherical seat (4) and the diameter and wall thickness of the flow deflector (5') are selected so that the fluid particles flowing through the flow deflector (5') are subjected to a deflection of less than 30°.

2. Proportional pressure regulating valve as claimed in claim 1, **characterised in that** the axial distance of the flow deflector (5') from the spherical seat (4) is greater than 1 • NW, where NW stands for the diameter of the orifice (16) in the flat seat (3).

3. Proportional pressure regulating valve as claimed in claims 1 and 2, **characterised in that** the diameter of the flow deflector (5') is smaller than 1.3 • NW.

4. Proportional pressure regulating valve as claimed in claim 1 to 3, **characterised in that** the wall thickness of the flow deflector (5') is smaller than 0.15 • NW.

5. Proportional pressure regulating valve as claimed in one or more of the preceding claims, **characterised in that** the diameter of the cross-bore (15) is bigger than 0.5 • NW.

6. Proportional pressure regulating valve as claimed in one or more of the preceding claims, **characterised in that** filter screens (9', 9) are fitted in the inlet orifice (6) and in the at least one outlet orifice (7), the mesh width of which is at least 190 µm.

7. Proportional pressure regulating valve as claimed in one or more of the preceding claims, **characterised in that** the total surface area of the outlet orifices (7) for the filling flow volume is greater than 4 • nominal surface area, where the nominal surface area is equal to 1 • NW² • π/4.

## Revendications

1. Soupape de régulation de pression proportionnelle comprenant une partie magnétique et une partie soupape, dans laquelle la partie soupape est pourvue d'une ouverture d'entrée (6) pour le flux volumique d'entrée, d'une première ouverture de sortie (7) pour le flux volumique plein et d'une seconde ouverture de sortie (8) pour le flux volumique de retour au réservoir, et comporte un siège de bille (4), un siège plat (3) pourvu d'une ouverture (16), et une partie formant obturateur (2) servant à commander le débit passant à travers l'ouverture (16) du siège plat (3), dans laquelle l'ouverture d'entrée (6) pour le flux volumique d'entrée est formée coaxialement à l'extrémité frontale (10) de la partie soupape qui est éloignée de la partie magnétique, et la au moins une ouverture de sortie (7) pour le flux volumique plein est formée dans la paroi latérale de la partie soupape, radialement par rapport à son axe longitudinal, **caractérisée par** un déviateur de jet (5') qui est disposé au niveau du siège plat (3) entre le siège de bille (4) et le siège plat (3) et qui est pourvu d'un perçage en croix (15) qui est formé radialement par rapport à l'axe longitudinal de la partie soupape de telle sorte qu'après avoir traversé le siège de bille (4), les particules de fluide qui se dirigent vers le déviateur de jet (5') peuvent s'écouler à travers le perçage en croix (15) du déviateur de jet (5') et à travers l'ouverture (16) du siège plat (3), la distance axiale du déviateur de jet (5') au siège de bille (4), ainsi que le diamètre et l'épaisseur de paroi du déviateur de jet (5') étant choisis de manière que les particules de fluide qui s'écoulent à travers le déviateur de jet (5') subissent une déviation de moins de 30°.

2. Soupape de régulation de pression proportionnelle selon la revendication 1, **caractérisée en ce que** la distance axiale du déviateur de jet (5') au siège de bille (4) est supérieure à 1 · NW, où NW est le diamètre de l'ouverture (16) du siège plat (3).

3. Soupape de régulation de pression proportionnelle selon les revendications 1 et 2, **caractérisée en ce que** le diamètre du déviateur de jet (5') est inférieur à 1,3 · NW.

4. Soupape de régulation de pression proportionnelle selon les revendications 1 à 3, **caractérisée en ce que** l'épaisseur de paroi du déviateur de jet (5') est inférieure à 0,15 · NW.

5. Soupape de régulation de pression proportionnelle selon une ou plusieurs des revendications précédentes, **caractérisée en ce que** le diamètre du perçage en croix (15) est supérieur à 0,5 · NW.

6. Soupape de régulation de pression proportionnelle selon une ou plusieurs des revendications précédentes, **caractérisée en ce que**, dans l'ouverture d'entrée (6) et dans la au moins une ouverture de sortie (7), sont interposés des tamis filtrants (9', 9) dont la largeur de maille est au moins égale à 190 µm.

7. Soupape de régulation de pression proportionnelle selon une ou plusieurs des revendications précédentes, **caractérisée en ce que** la surface totale des ouvertures de sortie (7) prévues pour le flux volumique plein est supérieure à 4 surfaces nominales, la surface nominale valant 1 · NW² · π/4.
